# EUROPEAN PATENT APPLICATION

(11) **EP 3 434 969 A1**
(43) Date of publication of application: **30.01.2019**
(21) Application number: 18185151.0
(22) Date of filing: 24.07.2018
(51) Int. Cl.: F21S 43/20, B60Q 1/48, B60Q 1/32, B60Q 1/24, B60Q 1/26

(54) **LIGHT MODULE WITH COLOR CONVERTER**

(30) Priority: 24.07.2017 US 201762536305 P
(71) Applicant: Ficosa North America Corporation, Madison Heights, MI 48071 (US)
(72) Inventor: HELLÍN NAVARRO, Sergio, Madison Heights, MI 48071 (US); SCHMIDT, Nicholas, Madison Heights, MI 48071 (US); NOVELLA REQUENA, María, Luisa, 08232 Viladecavalls (Barcelona) (ES)
(74) Representative: Herrero & Asociados, S.L.

(57) **Abstract**

A light module for use with a vehicle includes a housing defining an internal volume and an outlet, a light source positioned within the internal volume and configured to emit light of a first color, a converter positioned between the light source and the outlet, and a lens coupled to the housing. The converter receives the light of the first color and is configured such that, after receiving the light of the first color, light of a second color different from the first color passes out of the converter. The converter is separated from the light source. The lens includes a first portion extending across the outlet and a second portion extending from the first portion toward the converter. The light of the second color passes through the second portion and the first portion and out of the light module.

## Description

### CROSS-REFERENCE TO RELATED PATENT APPLICATION

This application claims the benefit of U.S. Provisional Application No. 62/536,305, filed July 24, 2017, which is incorporated herein by reference in its entirety.

### BACKGROUND

Vehicles are often parked in many different locations and on many different terrains. In some situations, obstacles or abnormalities in the terrain below a door of a vehicle hinder entrance into and/or egress from the vehicle. To facilitate identification of the obstacles or abnormalities, some vehicles include lighting devices, often referred to as puddle lamps, that illuminate the ground below the vehicle. These puddle lamps often utilize light sources that may not distribute light uniformly and may not provide light of a desired color.

### SUMMARY

Systems, methods, and apparatuses for a light module are shown and described. In one embodiment, a light module for use with a vehicle includes a housing defining an internal volume and an outlet, a light source positioned within the internal volume and configured to emit light of a first color, a converter positioned between the light source and the outlet, and a lens coupled to the housing. The converter is positioned to receive the light of the first color and configured such that, after receiving the light of the first color, light of a second color different from the first color passes out of the converter. The converter is separated from the light source such that the light of the first color travels a distance prior to being received by the converter. The lens includes a first portion extending across the outlet and a second portion extending from the first portion toward the converter and positioned to receive the light of the second color. The lens is configured such that, after receiving the light of the second color, the light of the second color passes through the second portion and the first portion and out of the light module.

In another embodiment, a light module for use with a vehicle includes a housing defining an internal volume and an outlet, an electrical connector extending through the housing and configured to receive electrical energy from a power source positioned outside of the housing, a light source positioned within the internal volume and configured to receive at least a portion of the electrical energy from the electrical connector and emit light of a first color, a converter positioned between the light source and the outlet, and a lens coupled to the housing and extending across the outlet. The converter is positioned to receive the light of the first color and configured such that, upon receiving the light of the first color, light of a second color different from the first color passes out of the converter. The converter is separated from the light source such that the light of the first color travels a distance prior to being received by the converter. The electrical connector and the lens are each sealingly coupled to the housing such that the internal volume of the housing is separated from the environment surrounding the light module, thereby preventing outside contaminants from coming into contact with the electrical component assembly.

In another embodiment, a method of manufacturing a light module for use with a vehicle includes providing a housing defining an internal volume and an outlet, positioning a light source within the internal volume, the light source configured to emit light of a first color, extending an electrical connector through the housing, electrically coupling an electrical component assembly to both the light source and the electrical connector, and positioning a converter within the internal volume such that the converter is offset a distance from the light source and such that the converter is configured to receive the light of the first color. The electrical connector is configured to receive electrical energy from a power source positioned outside of the housing. The electrical component assembly is configured to provide at least a portion of the electrical energy to the light source. The converter is configured such that, upon receiving the light of the first color, light of a second color different from the first color passes out of the converter. The housing is configured to be coupled to an exterior component of the vehicle such that the light of the second color passes out of the outlet and toward the ground beneath the vehicle.

These and other features, together with the organization and manner of operation thereof, may become apparent from the following detailed description when taken in conjunction with the accompanying drawings.

### BRIEF DESCRIPTION OF THE FIGURES

FIG. 1A is a perspective view of a side mirror of a vehicle containing a light module in a mirror housing of the side mirror, according to an exemplary embodiment;
FIG. 1B is a perspective view of a side mirror of a vehicle containing a light module in a base of the side mirror, according to an exemplary embodiment;
FIG. 1C is a perspective view of a light module coupled to a trim component of a vehicle, according to an exemplary embodiment;
FIG. 2 is a schematic section view of a light module, according to an exemplary embodiment;
FIG. 3 is a schematic illustration of a light source emitting light toward a converter, according to an exemplary embodiment;
FIG. 4 is a schematic section view of a light module, according to another exemplary embodiment;
FIG. 5 is a schematic section view of a light module, according to yet another exemplary embodiment; and
FIG. 6 is a section view of a light module, according to yet another exemplary embodiment.

### DETAILED DESCRIPTION

Referring to the Figures generally, systems, methods, and apparatuses for a light module having a color converter are shown.

Vehicles are parked in a variety of locations with a variety of terrains. In some instances, a user may park a vehicle over an obstacle or abnormality in the surface of the terrain that hinders entrance into or egress from the vehicle. By way of example, the user may park the vehicle such that a door through which the user enters and exits the vehicle is disposed above a recess in the terrain or above an obstacle such as common road debris (e.g., stones, garbage, etc.). Stepping out onto an obstacle or abnormality is undesirable, as it may not provide secure footing for the driver. Further, in some situations, the ground below the door may be covered in a substance, such as water or mud, that would otherwise be unpleasant to step out onto. When utilizing the vehicle at night, it may be difficult for the user to determine if they are stepping out onto a desirable surface or an undesirable surface. Some vehicles solve this problem by utilizing a puddle lamp. Puddle lamps emit light onto the ground below a vehicle, illuminating any abnormalities in the surface of the terrain or any obstacles near the vehicle.

According to the present disclosure, a light module includes a light source and a converter separated from the light source. Light from the light source is received by the converter. The converter filters or otherwise changes the color of the light (e.g., shifts the color of the light), such that light of a different color passes out of the converter. The addition of the converter facilitates the use of light sources emitting a broad variety of light colors to achieve the same desired light color. The light source and the converter are contained within a housing that facilitates coupling of the light module to another component. The housing may be coupled to any exterior component of a vehicle such that the light emitted by the light module spreads over the ground below the vehicle and the surrounding area.

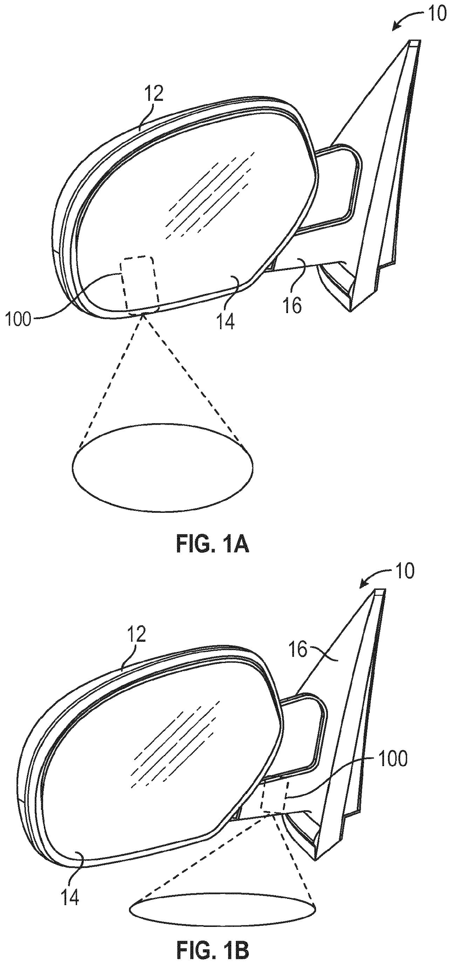

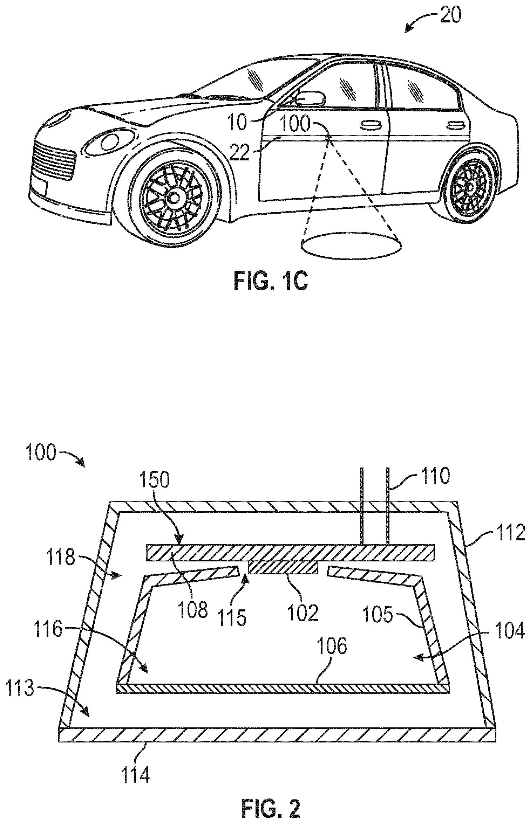

As shown in FIGS. 1A-1C, an illumination device or puddle lamp, shown as light module 100, is coupled to various exterior components of a vehicle. In FIGS. 1A and 1B, the light module 100 is coupled to an exterior component, shown as side mirror assembly 10. The side mirror assembly 10 is configured to provide a driver with a rearward view along the side of a vehicle while the driver is seated in a driver's seat of the vehicle. The side mirror assembly 10 incudes a side mirror housing 12 that includes one or more mirrors 14. The side mirror housing 12 is rotatably coupled to a side mirror base 16, which is fixedly coupled to the vehicle. In FIG. 1A, the light module 100 is coupled to or forms a part of the side mirror housing 12. In FIG. 1B, the light module 100 is coupled to or forms a part of the side mirror base 16. In FIG. 1C, a vehicle 20 includes a trim component 22 (e.g., a decorative component, a sealing member, a structural component, etc.), and the light module 100 is coupled to or forms a part of the trim component 22. In each of these embodiments, the light module 100 is configured to emit light toward the ground below the vehicle 20 and the surrounding area.

Referring to FIG. 2, the light module 100 is shown according to an exemplary embodiment. The light module 100 includes a light source 102 that emits light of a first color. This light passes into a chamber or volume, shown as a mixing chamber 104 that is defined by one or more mixing chamber walls, shown as walls 105. The interior surfaces of the walls 105 are reflective and specifically shaped to direct the light emitted by the light source 102 toward a color-shifting element, shown as converter 106. Light of the first color is received by (e.g., comes into contact with) the converter 106, and light of a second color different from the first color passes out of the converter 106. The light source 102 is electrically coupled to an electrical component assembly or circuit board, shown as a light source carrier 108 (e.g., a printed circuit board). The light source carrier 108 includes various components used to provide electrical energy to the light source 102 and/or control the output of the light source 102. Electrical contacts or connectors, shown as electrical connectors 110, extend from the light source carrier 108 and facilitate transmission of electrical energy and/or data from the vehicle to the light source carrier 108. The components of the light module 100 are contained within a housing 112, with the exception of the portions of the electrical connectors 110 that extend through the housing 112 (e.g., through a wall of the housing 112). The housing 112 defines an aperture or opening, shown as outlet 113, through which light of the second color passes. The housing 112 is coupled to and/or integrated into an exterior component of a vehicle such that the light passing through the outlet 113 illuminates an area below the vehicle. A lens, shown as outer lens 114, extends across the outlet 113, containing the components (e.g., the light source 102, the walls 105, the converter 106, the light source carrier 108, etc.) within the housing 112. Light passing out of the converter 106 passes through the outer lens 114 before exiting the light module 100.

Referring again to FIG. 2, the light source 102 is configured to emit light of a certain color corresponding to a source wavelength band. As used herein, a wavelength band may refer to a single wavelength or multiple wavelengths, and may be continuous (e.g., wavelengths from 500-550 nm) or discontinuous (wavelengths from 500-550 nm and 600-650 nm). The light source 102 may be any type of light-emitting device that is powered by electricity (e.g., an LED, an organic light-emitting diode (OLED), a laser diode, an incandescent bulb, a compact fluorescent bulb, etc.). The light source 102 may contain one or more individual light sources (e.g., a single LED, a cluster of LEDs, etc.). The light source 102 may be a device capable of emitting only a narrow wavelength band (e.g., a blue LED, etc.) or a device capable of emitting a broad wavelength band and/or a variable wavelength band (e.g., a white LED, a cluster of light sources containing a red LED, a green LED, and a blue LED (i.e., an RGB arrangement), an OLED, etc.). The light source 102 may have a variable intensity or brightness (e.g., by changing the voltage applied to the light source 102, by quickly and repeatedly powering the light source 102 on and off, etc.). In some embodiments, the light source 102 includes multiple individual light sources.

Referring again to FIG. 2, the light source 102 emits light into the mixing chamber 104. The walls 105 captures the light emitted from the light source 102 and directs it in primarily a single direction (e.g., toward the outlet 113). As shown in FIG. 2, the light source 102 is positioned in or adjacent an inlet or opening, shown as light source aperture 115, defined by the walls 105. The walls 105 further define an outlet or opening, shown as emission aperture 116, located opposite the light source aperture 115. The walls 105 extend between the light source aperture 115 and the emission aperture 116. The emission aperture 116 is larger (i.e., has a larger cross-sectional area) than the light source aperture 115, and the emission aperture 116 is offset a distance from the light source 102. The mixing chamber 104 extends between the walls 105, the light source aperture 115, and the emission aperture 116. The walls 105 may be configured to facilitate reflection of the light emitted by the light source 102. By way of example, the walls 105 may be shaped (e.g., angled relative to the light source 102) such that light striking the walls 105 laterally (i.e., horizontally as shown in FIG. 2) is redirected (e.g., vertically as shown in FIG. 2) toward the emission aperture 116. By way of another example, the interior surfaces of the walls 105 may be coated with a reflective coating. By way of another example, the walls 105 may be made of (e.g., made in part from, made entirely from) a material having inherent reflective properties (e.g., a plastic including titanium dioxide as a pigment and having a white color). In some embodiments, the walls 105 are configured such that 80% or more of the light that contacts the walls 105 is reflected and directed out of the emission aperture 116.

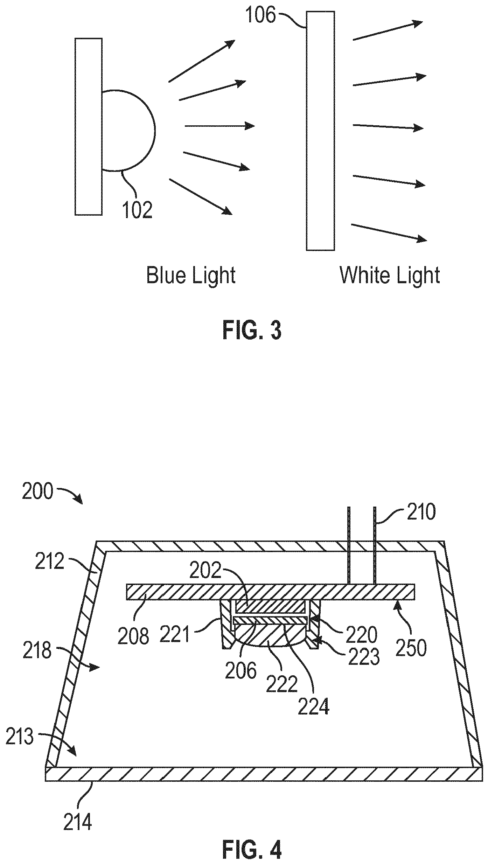

Referring to FIG. 2, the converter 106 extends across the emission aperture 116. The converter 106 extends across the entirety of the emission aperture 116 such that all of the light that passes through the emission aperture 116 is received by (e.g., comes into contact with) the converter 106. The converter 106 is configured such that light passes into the converter 106, and subsequently light passes out of the converter 106 and away from the light source 102. The converter 106 is configured such that light passing through the converter 106 undergoes a color shift from a first or source color corresponding to a source wavelength band, to a second or emission color corresponding to an emission wavelength band. The first color is different from the second color. The converter 106 may perform the color shift using a photochemical process or wavelength absorption (i.e., filtering). The converter 106 may include glass, silicone, and/or plastic in the form of lenses, plates, films, and/or molded shapes, each of which may be impregnated or coated with chemicals, dyes, pigments, additives, inks, etc. In some embodiments, the converter 106 includes a film, coating, or other layer of material (e.g., a phosphor material, a filtering material, etc.) that is applied to an exterior surface of or impregnated into a component that transmits light (e.g., a piece of transparent or translucent material, the outer lens 114, the optical lens 222 (see FIG. 4), etc.). The converter 106 may additionally be shaped to provide optical manipulation of the light received by the converter 106. By way of example, the converter 106 may be concave or convex to adjust a focal point of the converter 106 (e.g., bend the light passing through the converter 106). By way of another example, the converter 106 may be shaped such that the converter 106 splits the light into its constituent spectral colors, similar to an optical prism. The converter 106 may be coupled to the walls 105 such that the converter 106 is held in position relative to the mixing chamber 104. By way of example, the walls 105 may include one or more clips that retain the converter 106. By way of another example, the walls 105 may be sized such that the converter 106 can be press fit into the walls 105. By way of yet another example, the walls 105 may be formed in multiple separate parts that are coupled together, surrounding and retaining the converter 106.

The converter 106 may be configured such that, when paired with the light source 102 emitting a first color of light, light of a particular desired second color different from the first color passes out of the converter 106. In a first example, the light source 102 is a white LED, and the converter 106 is a filter. The filter is configured to absorb a predetermined wavelength band such that the light transmitted through the converter 106, and later emitted from the light module 100, is a specific desired color (e.g., blue, violet, yellow, amber, etc.). By way of a second example, shown in FIG. 3, the light source 102 is a non-white LED (e.g., a blue LED that emits blue light) and the converter 106 is a separate piece of transparent or translucent material coated or impregnated with a phosphor coating. The phosphor in the converter 106 absorbs a portion of the non-white light from the light source 102, and the phosphor emits light of a second, non-white color. The non-white light from the light source 102 is transmitted through the converter 106 and combines with the non-white light of the second color, generating white light. It should be understood that the converter 106 may transmit light therethrough, filter light that passes therethrough to achieve a desired color, and/or absorb light of a first color and emit light of a second color.

Referring again to FIG. 2, the light module 100 includes the light source carrier 108. The light source carrier 108 may include a printed circuit board (PCB). The light source carrier 108 is electrically coupled to the light source 102 and the electrical connectors 110 that extend from the light source carrier 108. Alternatively, the light source carrier 108 may be omitted, and the light source 102 may be directly coupled to the electrical connectors 110. As shown in FIG. 2, the light source 102 is directly and fixedly coupled to the light source carrier 108. The light source carrier 108 may be coupled to the housing 112, and the walls 105 may be coupled to the light source carrier 108. Alternatively, the light source carrier 108 may be indirectly coupled to the light source 102 (e.g., by one or more wires, etc.). The electrical connectors 110 may include wires, terminals, or other types of electrical contacts. By way of example, the electrical connectors 110 may include electrical contacts that are fixedly coupled to the light source carrier 108. By way of another example, the electrical connectors 110 may include wires that end in terminals.

The electrical connectors 110 facilitate communication between the light source carrier 108 and a control system of a vehicle. The electrical connectors 110 cooperate with a corresponding mating connector of the vehicle (e.g., a component of a wiring harness of the vehicle) to facilitate power and/or data connection to other components of the vehicle. Electrical energy flows to the light source 102 from a power source (e.g., a battery, a capacitor, an alternator, etc.) positioned outside the housing 112 through the electrical connectors 110 and the light source carrier 108. The light source carrier 108 includes various electrical components that power the light source 102. In some embodiments, the light source carrier 108 includes a light source driver configured to receive a data input and/or an electrical energy input and control the operation of the light source 102. By way of example, the light source driver may be configured to adjust the "on" or "off" state, the color, and/or the brightness of the light source 102. The light source driver may respond to an external input (e.g., from a controller of the vehicle) or be controlled using preprogrammed instructions. In some embodiments, the light source 102 is activated whenever electrical energy is supplied to the electrical connectors 110. By way of example, the vehicle may include a switch that supplies electrical energy to the light source carrier 108 whenever a door of the vehicle opens. The light source carrier 108 may further include a heat sink or other component configured to facilitate dissipation of heat from the light source 102 and the other electrical components.

In some embodiments, the light module 100 includes a direct coating or sealant, shown as coating 150, that extends across a surface of one or more components. The coating 150 may cover some or all of the light source 102, the light source carrier 108, the electrical connectors 110, or other components of the light module 100. Specifically, as shown in FIG. 2, the coating covers the light source carrier 108. The coating 150 acts as a barrier, preventing outside contaminants from coming into contact with components inside of the housing 112 and thereby reducing the potential for damage to those components.

Referring to FIG. 2, the light source 102, the converter 106, and the light source carrier 108 are contained within an internal volume 118 defined by the housing 112. The electrical connectors 110 extend through the housing 112 from the light source carrier 108 to the environment surrounding the light module 100. The housing 112 and/or the electrical connectors 110 may be configured to couple (e.g., sealingly couple) to an electrical connector of a vehicle. By way of example, the electrical connectors 110 may include a rubber grommet configured to seal against the electrical connector of the vehicle, and the housing 112 may include one or more clips configured to selectively couple the electrical connector of the vehicle to the housing 112. The housing 112 defines an exterior surface of the light module 100. The housing 112 defines the outlet 113 which is located on one end of the housing 112 and through which light passes after passing out of the converter 106. The light source 102 is located proximate an end of the housing 112 opposite the outlet 113. The converter 106 and the mixing chamber 104 extend between the light source 102 and the outlet 113. The housing 112 may include various structures (e.g., bosses, ribs, gussets, etc.) that extend toward the other components of the light module 100, providing locations to which to couple (e.g., fasten, adhere, etc.) the other components. By way of example, the housing 112 may include one or more bosses to which the light source carrier 108 is coupled. The housing 112 is shaped to facilitate positioning the various components of the light module 100. The housing 112 is configured to be coupled to a component of the vehicle (e.g., the side mirror housing 12, the side mirror base 16, the trim component 22, a door handle, etc.). Accordingly, the housing 112 may define external features with which to couple the light module 100 to the vehicle (e.g., bosses, ribs, apertures, clips, pegs, etc.). In other embodiments, the housing 112 is integrally formed with a component of a vehicle.

Referring again to FIG. 2, the outer lens 114 extends across the outlet 113 of the housing 112 and is coupled (e.g., welded, glued, fastened, etc.) to the housing 112. The converter 106 is separated (e.g., offset) a first distance from the light source 102, and the outer lens 114 is separated a second distance from the converter 106 such that the converter 106 is disposed between the light source 102 and the outer lens 114. The first distance and the second distance may or may not be equal. Light of the first color emitted by the light source 102 travels over the first distance through the mixing chamber 104 and is received by the converter 106. Light of the second color passes out of the converter 106 and travels over the second distance, through the outer lens 114, and out of the light module 100. The outer lens 114 may be made from a transparent or partially transparent material (e.g., glass, gray polycarbonate, etc.) to facilitate transmission of light through the outer lens 114. The outer lens 114 may perform an additional color shift on the light passing out of the converter 106. In some embodiments, the outer lens 114 is configured to perform further optical manipulation of the light passing out of the converter 106.

Referring now to FIG. 4, a light module 200 is shown according to an alternative embodiment. The light module 200 shown in FIG. 4 may be substantially similar to the light module 100 shown in FIG. 2, except as otherwise stated. The walls 105 and the mixing chamber 104 of FIG. 2 are omitted from the light module 200. Instead, a light source 202 is positioned within a chamber or volume, shown as a chamber 220, that is defined between a light source carrier 208 and a wall or support member, shown as support 221. The light module 200 further includes a lens, shown as optical lens 222, coupled to the light source carrier 208 through the support 221. The optical lens 222 extends across an outlet or opening, shown as emission aperture 223, defined by the support 221. A converter 206 extends along an inner surface 224 of the optical lens 222. Accordingly, the converter 206 also extends across the emission aperture 223. Similar to the walls 105 shown in FIG. 2, the interior surfaces of the support 221 may be reflective and/or specifically shaped to direct the light emitted by the light source 202 toward the converter 206. However, the chamber 220 is smaller than the mixing chamber 104 (see FIG. 2), reducing the distance between the light source 202 and the converter 206. Accordingly, the support 221 may not be reflective or specifically shaped to direct the light emitted by the light source 202 toward the converter 206, as the majority of the light from the light source 202 passes from the light source 202 to the converter 206 without contacting the support 221. The light source 202, the converter 206, the light source carrier 208, the support 221, and the optical lens 222 are positioned within an internal volume 218 defined by a housing 212. Electrical connectors 210 extend from the light source carrier 208 through the housing 212. The housing 212 further defines an outlet 213, and an outer lens 214 extends across the outlet 213. A coating 250 may extend across one or more surfaces of the light source 202, the light source carrier 108, the electrical connectors 210, or other components of the light module 200.

In some embodiments, the converter 206 extends across the entire emission aperture 223 such that all of the light that passes through the emission aperture 223 also passes through the converter 206. As shown in FIG. 4, the converter 206 is coupled to the optical lens 222, and the optical lens 222 is coupled to the light source carrier 208 by the support 221. Alternatively, the support 221 may be directly coupled to the converter 206 such that the converter 206 is retained within or adjacent to the emission aperture 223. In some embodiments, the chamber 220 and the emission aperture 223 are smaller (e.g., have a smaller cross-sectional area) than the mixing chamber 104 and the emission aperture 116 (see FIG. 2). Accordingly, the volume of the chamber 220 is generally smaller than the volume of the mixing chamber 104.

The optical lens 222 is coupled (e.g., fixedly, removably, etc.) to the support 221. In some embodiments, the optical lens 222 is disposed between the light source 202 and the converter 206, such that the light emitted by the light source 202 passes through the optical lens 222 before reaching the converter 206. In other embodiments, the optical lens 222 is disposed between the converter 206 and the outer lens 214, such that the light passing out of the converter 206 passes through the optical lens 122 before reaching the outer lens 114. The optical lens 222 may be configured to diffuse light, provide a color shift by filtering or through a photochemical process, or provide another form of optical manipulation. In some embodiments, the light module 200 additionally or alternatively includes other lenses.

Referring to FIG. 4, the light source 202 is configured to emit light of a first color into the chamber 220. The light of the first color passes across a first distance between the light source 202 and the converter 206. After light of the first color is received by the converter 206, light of a second color different from the first color passes out of the converter 206 and is received by the optical lens 222. The light of the second color passes across a second distance through the optical lens 222 and the portion of the internal volume 218 between the optical lens 222 and the outer lens 214. The light then passes through the outer lens 214 and out of the light module 200 through the outlet 213.

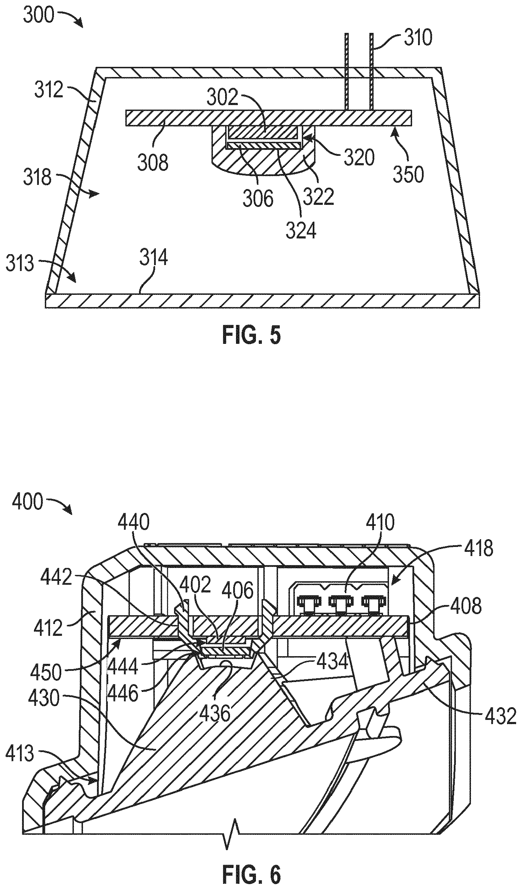

Referring now to FIG. 5, a light module 300 is shown according to an alternative embodiment. The light module 300 shown in FIG. 5 may be substantially similar to the light module 200 shown in FIG. 4, except as otherwise stated. In the light module 300, the support 221 of FIG. 4 is omitted, and an optical lens 322 extends toward and directly couples to a light source carrier 308. The optical lens 322 partially surrounds a light source 302. Accordingly, a chamber 320 containing the light source 302 is defined between the optical lens 322 and the light source carrier 308. In some embodiments, the optical lens 322 is a single piece of glass or injection-molded plastic. In other embodiments, the optical lens 322 is formed from multiple pieces. A converter 306 is coupled to and extends across an inner surface 324 of the optical lens 322. In some embodiments, the converter 306 is a film or coating of phosphor or filtering material that is adhered to the inner surface 324. Similar to the walls 105 shown in FIG. 2, one or more interior surfaces of the optical lens 322 (e.g., surfaces that extend toward the light source carrier 308) may be reflective and/or specifically shaped to direct the light emitted by the light source 302 toward the converter 306. However, the chamber 320 is smaller than the mixing chamber 104 (see FIG. 2), reducing the distance between the light source 302 and the converter 306. Accordingly, the optical lens 322 may not be reflective or specifically shaped to direct the light emitted by the light source 302 toward the converter 306, as the majority of the light from the light source 302 passes from the light source 302 to the converter 306 without first contacting the optical lens 322. The light source 302, the converter 306, the light source carrier 308, and the optical lens 322 are positioned within an internal volume 318 defined by a housing 312. Electrical connectors 310 extend from the light source carrier 308 through the housing 312. The housing 312 further defines an outlet 313, and an outer lens 314 extends across the outlet 313. A coating 350 may extend across one or more surfaces of the light source 302, the light source carrier 308, the electrical connectors 310, or other components of the light module 300.

During operation, light of a first color is emitted from the light source 302 and passes over a first distance through the chamber 320. The light of the first color is received by the converter 306, and light of a second color passes out of the converter 306. The light of the second color passes over a second distance through the optical lens 322 and the portion of the internal volume 318 between the optical lens 322 and the outer lens 314. The optical lens 322 may perform optical manipulation (e.g., due to a convex surface, etc.) as the light of the second color passes therethrough. The light of the second color then passes through the outer lens 314 and exits the light module 300 through the outlet 313. An interior surface of the housing 312 may be reflective and/or shaped to direct light toward the outlet 313.

Referring now to FIG. 6, a light module 400 is shown according to another alternative embodiment. The light module 400 may be substantially similar to the light module 200 shown in FIG. 4, except as otherwise stated. The light module 400 includes an optical lens or outer lens, shown as outer lens 430. The outer lens 430 includes a first portion 432 that extends across an outlet 413 of a housing 412. A second portion 434 of the outer lens 430 extends from the first portion 432 toward a light source 402 and a converter 406. In some embodiments, the second portion 434 is at least partially tapered (e.g., conical, frustoconical, pyramidal, etc.), reducing in cross-sectional area as it extends away from the first portion 432. As shown in FIG. 6, the second portion 434 has a surface, shown as convex surface 436, positioned proximate and facing (e.g., oriented toward) the converter 406. The convex surface 436 has a convex curvature (e.g., a spherical curvature, a non-spherical curvature, etc.). The convex surface 436 is configured to receive light of the second color from the converter 406. Accordingly, the outer lens 430 may be configured to perform optical manipulation of the light of the second color. In other embodiments, the outer lens 430 is otherwise shaped. The outer lens 430 performs similar functions to both the optical lens 222 (e.g., optical manipulation) and the outer lens 214 (e.g., extending across the outlet 413 to contain components within the internal volume 418) of FIG. 4.

The converter 406 is coupled to the light source carrier 408 by a support member, shown as converter support 440. The converter support 440 holds the converter 406 in place directly between the light source 402 and the outer lens 430. As shown in FIG. 6, the converter support 440 extends through one or more corresponding apertures 442 defined by the light source carrier 408 to couple the converter support 440 to the light source carrier 408. In other embodiments, the converter support 440 is otherwise coupled to the light source carrier 408 (e.g., fastened, adhered, etc.). A chamber 444 is defined between the light source carrier 408 and the converter support 440. The converter support 440 further defines an outlet or opening, shown as emission aperture 446. The converter 406 extends across the emission aperture 446. In some embodiments, an interior surface of the converter support 440 is reflective and/or specifically shaped to direct light toward the emission aperture 446, similar to the walls 105 (see FIG. 2). However, the chamber 444 is smaller than the mixing chamber 104 of FIG. 2, reducing the distance between the light source 402 and the converter 406. Accordingly, the converter support 440 may not be reflective or specifically shaped to direct the light emitted by the light source 402 toward the converter 406, as the majority of the light from the light source 402 passes from the light source 402 to the converter 406 without contacting the converter support 440. The light source 402, the converter 406, the light source carrier 408, and the converter support 440 are positioned within an internal volume 418 defined by the housing 412. Electrical connectors 410 extend from the light source carrier 408 through the housing 412. A coating 450 may extend across one or more surfaces of the light source 402, the light source carrier 408, the electrical connectors 410, or other components of the light module 400.

The converter 406 is separated a first distance from the light source 402 and separated a second distance from the outer lens 430. Although the first distance is shown in FIG. 6 as being smaller than the second distance, the first distance may alternatively be larger than or equal to the second distance. During operation, the light source 402 emits light of the first color. The light of the first color travels across the first distance through the chamber 444 and is received by the converter 406. Light of the second color passes out of the converter 406, travels across the second distance through the portion of the internal volume 418 between the converter 406 and the outer lens 430, and is received by the outer lens 430 (e.g., at the convex surface 436). The light of the second color passes through both portions of the outer lens 430 and exits the housing 412 through the outlet 413.

In each of the embodiments described herein, the light module may be configured to prevent fluid, dust, or other outside contaminants from the environment surrounding the light module from coming into contact with certain components within the internal volume (e.g., the light source, the walls 105, the converter, the light source carrier, the optical lens, etc.). This prevents damage to the components from sources such as corrosion, improving the working life of the light module and facilitating use of the light module in harsh conditions (e.g., wet conditions, conditions having a high salt concentration, etc.).

The electrical connectors, the housing, and the outer lens each have exterior surfaces that are or may be exposed to the environment. In some embodiments, the electrical connectors and the outer lens form a seal with (e.g., are sealingly coupled to) the housing. By way of example, the outer lens may press directly against the housing (e.g., being adhered or welded in place, such as through ultrasonic welding) to form a seal, preventing outside contaminants from entering the internal volume between the outer lens and the housing. By way of another example, a grommet, elastomeric sealing member, or other type of sealing member may be positioned between the electrical connectors and the housing, forming a seal between the electrical connectors to the housing and thereby preventing outside contaminants from entering the internal volume between the outer lens and the housing. Either type of seal may be used between the housing and the electrical connectors or the outer lens. The seals between the housing, the electrical connectors, and the outer lens or the outer lens separate the internal volume from the environment, preventing outside contaminants from coming into contact with components within the internal volume. Accordingly, in embodiments that utilize such a seal, the housing may not include additional apertures that would otherwise fluidly couple the internal volume to the environment.

In other embodiments, the light module includes a coating that extends across a surface of one or more components. The coating may cover some or all of the light source, the light source carrier, the electrical connectors, or other components of the light module. The coating may utilize a conformal coating material or may be formed through potting. The coating may include acrylic, epoxy, polyurethane, silicone, or other materials. The coating prevents outside contaminants from coming into contact with the components that it covers, preventing damage to those components even if outside contaminants enter the internal volume. The coating may be used in embodiments that utilize sealed connections to separate the internal volume from the environment. Alternatively, the coating may be used to eliminate the need for such sealed connections. Further alternatively, the coating may be omitted.

In each of the embodiments described herein, the light source is separated a distance from the converter such that the light source (e.g., an LED) is remote from the converter. In the embodiment shown in FIG. 2, the converter 106 is closer to the outer lens 114 than the light source 102. Accordingly, light travels farther between the light source 102 and the converter 106 than between the converter 106 and the outer lens 114. In the embodiments shown in FIGS. 4, 5, and 6, the converter is closer to the light source than the outer lens. Accordingly, light travels farther between the converter and the outer lens than between the light source and the converter. Additionally, in the embodiment shown in FIG. 2, the converter 106 is closer to the outer lens 114 than the light source carrier 108 or the wall of the housing 112 opposite the outlet 113. In the embodiments shown in FIGS. 4 and 5, the converter is closer to the light source carrier and the wall of the housing opposite the outlet than it is to the outer lens.

Providing a converter remote from the light source provides a number of benefits relative to an arrangement that lacks a remote converter. The embodiments of the light module disclosed herein provides greater color stability over an extended period of operation, increased efficacy, and reduced operating temperature when compared to an arrangement where a color-shifting material is directly and permanently attached to a light source. Some light sources (e.g., LEDs, laser diodes, etc.) provide high intensity light from one single point. Such a point source may suffer from non-uniform light distribution and/or bright areas on an outer lens, which can distract the user. To reduce these effects, some conventional puddle lamps include an additional diffusion optical element to more uniformly distribute light. Because the light emitted from the light source travels a distance before contacting the converter, the light can mix (e.g., by reflecting off of the walls 105, the support 221, the support 321, or the converter support 420) and become more uniformly distributed before leaving the light module. Additionally, the converter, the optical lens, and/or the outer lens may be configured to further diffuse the light.

Additionally, the light source and the converter may be configured specifically to cooperate with one another to output light of a specific color. The light source may be configured to emit a specific color of light, and the converter may be configured to perform a corresponding color shift, such that the light module outputs a specific color of light. Use of the converter facilitates production of multiple unique colors of light with a light source that outputs light having a single fixed color. By way of example, multiple light modules may be configured to emit light of different specific colors. Each light module may use the same light source, and each converter can be configured differently to output a desired color of light. Further, the converter may be used to compensate for variability in the color of the light emitted from the light source. By way of example, due to variability in manufacturing, each light source may emit a slightly different color of light. Each converter may be configured to cooperate with a specific light source, compensating for variations in the color of the light produced by the light source, such that each light module emits a consistent color of light. Conventional puddle lamps lack the converter and accordingly do not compensate for variations in light color beyond replacing or reconfiguring the light source.

In each of the embodiments described herein, the light module may be configured to be coupled to an exterior component of a vehicle. The light module may be coupled to and/or located within a mirror housing (e.g., the side mirror housing 12), a door handle, a running board, an extension coupling a mirror to the vehicle (e.g., the side mirror base 16), a trim component (e.g., the trim component 22), a vehicle underbody, a winglet used to house a camera in a mirrorless vehicle, or another exterior component of the vehicle. The light module emits light downward such that an area below the vehicle is illuminated. The light module may illuminate an area beneath a single door or multiple doors of the vehicle. This illumination facilitates a user seeing what is below the door (e.g., debris, abnormalities in the terrain, mud, etc.) and avoiding stepping out onto an undesirable surface. By way of example, the light module may be located within a door of the vehicle and configured such that as the door swings open, the light module illuminates the ground located below the door and the surrounding area. By way of another example, the light module may be located in a side mirror of a vehicle, such that the light module illuminates the portion of the vehicle located below the mirror and the surrounding area in response to the user interacting with an interface (e.g., a button, a touchscreen, a switch, etc.) located within the vehicle.

In some embodiments, instead of projecting a single, uniform area of light on the ground below the vehicle, the light module projects an image (e.g., a piece of text, a logo, etc.). In one such embodiment, the light module includes an additional filter (e.g., between the converter and the outer lens) that blocks light and/or performs a color shift to achieve the desired image. By way of another example, the converter and/or the outer lens may be configured to block light and/or perform a color shift to produce the desired image.

In some embodiments, the vehicle includes multiple light modules. By way of example, multiple light modules may be coupled to an underbody of the vehicle such that the full length of the vehicle is illuminated. By way of another example, both the left and the right sides of the vehicle may each include a light module such that the ground beneath both sides of the vehicle is illuminated. By way of another example, the vehicle may include a cluster of light modules each arranged adjacent to one another.

In some embodiments, the outer lens is omitted. By way of example, the outer lens may be omitted, and the converter may extend across the outlet and seal with the housing similar to the outer lens. Alternatively, the converter may be directly coupled to the outer lens. By way of example, the converter may include a film or coating that extends across an inner or an outer surface of the outer lens. In both such examples, the converter may include a material, such as plastic or glass, that provides a structure to support the converter, as opposed to including only a film or coating that might otherwise require support from another structure. The walls 105, the support, or the converter support 140 may extend to support the converter. Alternatively, the walls 105, the support, or the converter support 140 may be omitted. The interior of the housing may be configured to direct light toward the converter similar to the walls 105 of FIG. 2.

The light module may be utilized with a variety of vehicles. For example, the light module may be utilized by trucks, delivery trucks, delivery vans, refuse trucks, construction vehicles, agricultural vehicles, emergency vehicles, military vehicles, cars, race cars, competition vehicles, motorcycles, mopeds, scooters, bicycles, aircraft, and other vehicles. The light module may be used in applications other than illumination of the ground (e.g., illumination of an interior of the vehicle, illumination of an exterior component of the vehicle such as a door handle, etc.).

The embodiments described herein have been described with reference to drawings. The drawings illustrate certain details of specific embodiments that implement the systems, methods and programs described herein. However, describing the embodiments with drawings should not be construed as imposing on the disclosure any limitations that may be present in the drawings.

The present disclosure is not limited to the particular methodology, protocols, and expression of design elements, etc. described herein and as such may vary. The terminology used herein is for the purpose of describing particular embodiments only, and is not intended to limit the scope of the present disclosure.

As used herein, the singular forms include the plural reference and vice versa unless the context clearly indicates otherwise. The term "or" is inclusive unless modified, for example, by "either." For brevity and clarity, a particular quantity of an item may be described or shown while the actual quantity of the item may differ. Other than in the operating examples, or where otherwise indicated, all numbers expressing measurements used herein should be understood as modified in all instances by the term "about" allowing for ranges accepted in the art.

Unless defined otherwise, all technical terms used herein have the same meaning as those commonly understood to one of ordinary skill in the art to which this invention pertains. Although any known methods, devices, and materials may be used in the practice or testing of the inventive concepts, the methods, devices, and materials in this regard are described herein.

The foregoing description of embodiments has been presented for purposes of illustration and description. It is not intended to be exhaustive or to limit the disclosure to the precise form disclosed, and modifications and variations are possible in light of the above teachings or may be acquired from this disclosure. The embodiments were chosen and described in deposit to explain the principals of the disclosure and its practical application to enable one skilled in the art to utilize the various embodiments and with various modifications as are suited to the particular use contemplated. Other substitutions, modifications, changes and omissions may be made in the design, operating conditions and arrangement of the embodiments without departing from the scope of the present disclosure.

## Claims

1. A light module for use with a vehicle, comprising:
a housing defining an internal volume and an outlet;
a light source positioned within the internal volume and configured to emit light of a first color;
a converter positioned between the light source and the outlet, wherein the converter is positioned to receive the light of the first color, wherein the converter is configured such that, after receiving the light of the first color, light of a second color different from the first color passes out of the converter, and wherein the converter is separated from the light source such that the light of the first color travels a distance prior to being received by the converter; and
a lens coupled to the housing, the lens including:
a first portion extending across the outlet; and
a second portion extending from the first portion toward the converter and positioned to receive the light of the second color, wherein the lens is configured such that, after receiving the light of the second color, the light of the second color passes through the second portion and the first portion and out of the light module.

2. The light module of Claim 1, wherein the second portion of the lens has a convex surface oriented toward the converter and configured to receive the light of the second color.

3. The light module of Claim 1, further comprising:
an electrical connector extending through the housing and configured to receive electrical energy from a power source positioned outside of the housing; and
an electrical component assembly electrically coupling the light source to the electrical connector such that the light source receives at least a portion of the electrical energy provided by the power source;
wherein the light module is configured to prevent outside contaminants from coming into contact with at least one of the light source and the electrical component assembly.

4. The light module of Claim 3, further comprising a coating extending across a surface of the at least one of the light source and the electrical component assembly and configured to prevent outside contaminants from coming into contact with the at least one of the light source and the electrical component assembly.

5. The light module of Claim 3, wherein the electrical connector and the lens are each sealingly coupled to the housing such that the internal volume of the housing is separated from the environment surrounding the light module, thereby preventing outside contaminants from coming into contact with the at least one of the light source and the electrical component assembly.

6. The light module of Claim 1, wherein the distance is a first distance, and wherein the converter is separated from the lens such that the light of the second color travels a second distance prior to being received by the lens.

7. The light module of Claim 1, further comprising:
an electrical connector extending through the housing and configured to receive electrical energy from a power source positioned outside of the housing;
an electrical component assembly electrically coupling the light source to the electrical connector such that the light source receives at least a portion of the electrical energy provided by the power source;
wherein the light source is directly coupled to the electrical component assembly.

8. The light module of Claim 1, wherein the light module is configured to be coupled to an exterior component of the vehicle, and wherein the light module is configured to emit the light of the second color toward the ground beneath the vehicle.

9. A light module for use with a vehicle, comprising:
a housing defining an internal volume and an outlet;
an electrical connector extending through the housing and configured to receive electrical energy from a power source positioned outside of the housing;
a light source positioned within the internal volume and configured to receive at least a portion of the electrical energy from the electrical connector and emit light of a first color;
a converter positioned between the light source and the outlet, wherein the converter is positioned to receive the light of the first color, wherein the converter is configured such that, upon receiving the light of the first color, light of a second color different from the first color passes out of the converter, and wherein the converter is separated from the light source such that the light of the first color travels a distance prior to being received by the converter;
and
a lens coupled to the housing and extending across the outlet;
wherein the electrical connector and the lens are each sealingly coupled to the housing such that the internal volume of the housing is separated from the environment surrounding the light module, thereby preventing outside contaminants from entering the internal volume.

10. The light module of Claim 9, further comprising:
an electrical component assembly electrically coupling the light source to the electrical connector; and
a coating extending across a surface of at least one of the light source and the electrical component assembly, thereby preventing outside contaminants from coming into contact with the at least one of the light source and the electrical component assembly.

11. The light module of Claim 9, wherein the lens includes:
a first portion extending across the outlet; and
a second portion extending from the first portion toward the converter and positioned to receive the light of the second color, wherein the lens is configured such that, after receiving the light of the second color, the light of the second color passes through the second portion and the first portion and out of the light module.

12. The light module of Claim 11, wherein the second portion of the lens has a convex surface oriented toward the converter and configured to receive the light of the second color.

13. The light module of Claim 11, wherein the distance is a first distance, and wherein the converter is separated from the lens such that the light of the second color travels a second distance prior to being received by the lens.

14. The light module of Claim 9, further comprising a circuit board electrically coupling the light source to the electrical connector, wherein the light source is directly coupled to the circuit board.

15. The light module of Claim 9, wherein the light module is configured to be coupled to an exterior component of the vehicle, and wherein the light module is configured to emit the light of the second color toward the ground beneath the vehicle.

16. A method of manufacturing a light module for use with a vehicle, the method comprising:
providing a housing defining an internal volume and an outlet;
positioning a light source within the internal volume, the light source configured to emit light of a first color;
extending an electrical connector through the housing, wherein the electrical connector is configured to receive electrical energy from a power source positioned outside of the housing;
electrically coupling an electrical component assembly to both the light source and the electrical connector, wherein the electrical component assembly is configured to provide at least a portion of the electrical energy to the light source; and
positioning a converter within the internal volume such that the converter is offset a distance from the light source and such that the converter is configured to receive the light of the first color, wherein the converter is configured such that, upon receiving the light of the first color, light of a second color different from the first color passes out of the converter;
wherein the housing is configured to be coupled to an exterior component of the vehicle such that the light of the second color passes out of the outlet and toward the ground beneath the vehicle.

17. The method of manufacturing of Claim 16, further comprising coupling a lens to the housing, wherein the lens includes:
a first portion extending across the outlet; and
a second portion extending from the first portion toward the converter and positioned to receive the light of the second color, wherein the lens is configured such that, after receiving the light of the second color, the light of the second color passes through the second portion and the first portion and out of the light module.

18. The method of manufacturing of Claim 17, wherein the second portion of the lens has a convex surface oriented toward the converter and configured to receive the light of the second color.

19. The method of manufacturing of Claim 16, further comprising applying a coating across a surface of at least one of the light source and the electrical component assembly, wherein the coating is configured to prevent outside contaminants from coming into contact with the at least one of the light source and the electrical component assembly.

20. The method of manufacturing of Claim 16, further comprising positioning a lens such that the lens extends across the outlet, wherein the electrical connector and the lens are each sealingly coupled to the housing such that the internal volume of the housing is separated from the environment surrounding of the light module, thereby preventing outside contaminants from coming into contact with at least one of the light source and the electrical component assembly.
